# EUROPEAN PATENT APPLICATION

(11) **EP 4 213 026 A1**
(43) Date of publication of application: **19.07.2023**
(21) Application number: 21879141.6
(22) Date of filing: 01.09.2021
(51) Int. Cl.: G06F 11/22

(54) **FAULT DETECTION METHOD AND ELECTRONIC TERMINAL**

(30) Priority: 14.10.2020 CN 202011099073
(71) Applicant: Huawei Technologies Co., Ltd., Shenzhen, Guangdong 518129 (CN)
(72) Inventor: DU, Houqing, Shenzhen, Guangdong 518129 (CN); CAO, Yi, Shenzhen, Guangdong 518129 (CN); GAO, Shengwu, Shenzhen, Guangdong 518129 (CN); LI, Siyu, Shenzhen, Guangdong 518129 (CN)
(74) Representative: Maiwald GmbH
(86) International application number: PCT/CN2021/115994
(87) International publication number: WO 2022/078095

(57) **Abstract**

This application relates to a fault detection method and an electronic terminal. The fault detection method includes: receiving, in a state in which an electronic terminal displays a first interface, a first user input used to perform fault detection on the electronic terminal; starting a fault detection application in response to the first user input; and displaying a fault detection interface of the fault detection application. In this application, when the electronic terminal displays the first interface, the first user input can be used to enable the electronic terminal to start the fault detection application and display the fault detection interface. Therefore, a probability of privacy disclosure is reduced, and maintenance efficiency is improved.

## Description

This application claims priority to Chinese Patent Application No. 202011099073.2, filed with the China National Intellectual Property Administration on October 14, 2020 and entitled "FAULT DETECTION METHOD AND ELECTRONIC TERMINAL", which is incorporated herein by reference in its entirety.

### TECHNICAL FIELD

This application relates to the field of communication technologies, and in particular, to a fault detection method and an electronic terminal.

### BACKGROUND

In daily life, electronic terminals such as mobile phones may be faulty and cannot be used. In this case, many users choose to send the faulty electronic terminal to a maintenance center for inspection and maintenance. In this period, to protect user privacy, the users usually set the respective electronic terminals to a maintenance mode. In the maintenance mode, data related to personal data may be encrypted and isolated to protect the personal data from being viewed during maintenance. However, in a related technology, a maintenance person needs to set the electronic terminal to the maintenance mode by touching a related control on the electronic terminal when the user equipment is unlocked. Therefore, the user needs to provide a lock screen password to the maintenance person. Consequently, a probability of privacy disclosure is increased, and costs of maintenance by the maintenance person are increased.

### SUMMARY

In view of this, a fault detection method and an electronic terminal are provided, so that when the electronic terminal displays a first interface, the electronic terminal can directly display a fault detection interface, to reduce a probability of privacy disclosure and improve maintenance efficiency.

According to a first aspect, an embodiment of this application provides a fault detection method. The method includes: receiving, in a state in which an electronic terminal displays a first interface, a first user input used to perform fault detection on the electronic terminal; starting a fault detection application in response to the first user input; and displaying a fault detection interface of the fault detection application.

The fault detection method is a method performed on the electronic terminal. When the electronic terminal displays the first interface, the fault detection interface may be directly displayed after the first user input is received, so that costs of communication with a maintenance person can be reduced, and maintenance efficiency can be improved.

According to the first aspect, in a first possible implementation of the first aspect, the first interface includes a lock screen interface of the electronic terminal in a screen locked state or an application interface presented during execution of an application by the electronic terminal.

That is, in the fault detection method, when the electronic terminal is in the screen locked state, the first user input may be directly used to enable the electronic terminal to display the fault detection interface, and the fault detection interface may be entered without unlocking the electronic terminal, thereby reducing a probability of privacy disclosure. Alternatively, when a user uses the electronic terminal, the application interface presented during execution of an application by the electronic terminal may be directly replaced with the fault detection interface. Compared with an existing manner in which a maintenance interface can be entered only by using a multi-step user input, this improves the maintenance efficiency.

According to any one of the first aspect or the implementation of the first aspect, in a second possible implementation of the fault detection method, the receiving, in a state in which an electronic terminal displays a first interface, a first user input used to perform fault detection on the electronic terminal includes: when it is detected that a universal serial bus port of the electronic terminal is connected, receiving the first user input of pressing both a volume up button and a power button for a preset time period.

That is, when the universal serial bus port of the electronic terminal is connected to a data line, both the volume up button and the power button may be pressed and held, so that the electronic terminal directly starts the fault detection application and displays the fault detection interface. A preferred implementation of the first user input is provided above.

According to any one of the first aspect or the implementations of the first aspect, in a third possible implementation of the fault detection method, after the starting a fault detection application and displaying a fault detection interface of the fault detection application, the method further includes: displaying a list of secure network connection hotspots that are verified as secure in found network connection hotspots; receiving a second user input, where the second user input includes selecting a first network connection hotspot from the list of network connection hotspots and entering a connection password of the first network connection hotspot; and accessing the first network connection hotspot in response to the second user input.

That is, in the fault detection method, a network connection hotspot that can be connected may be screened, and a trusted network connection hotspot is displayed on the electronic terminal for selection by the user, so that network connection security can be further ensured, and data security during fault detection can be improved.

According to the third possible implementation of the first aspect, in a fourth possible implementation of the first aspect, after the accessing the first network connection hotspot, the method further includes: obtaining a detection configuration file for the electronic terminal from a detection server corresponding to the electronic terminal; and determining, by using the detection configuration file, that the electronic terminal supports the fault detection.

That is, the electronic terminal may determine, based on the detection configuration file obtained from the detection server, whether the electronic terminal supports the fault detection, to better meet requirements for the fault detection in different regions.

According to the fourth possible implementation of the first aspect, in a fifth possible implementation of the first aspect, after the determining that the electronic terminal supports the fault detection, the method further includes: displaying a diagnosis analysis interface used to indicate to enter verification information for the fault detection; receiving the verification information entered by a user in the diagnosis analysis interface; and sending the verification information to the detection server.

That is, the user needs to enter the verification information in the diagnosis analysis interface and send the verification information to the detection server before a subsequent fault detection step can be performed. By using the verification information, it is implemented that only an authorized user can perform fault detection on the electronic terminal, to ensure professionalism and security of the fault detection.

According to the fifth possible implementation of the first aspect, in a sixth possible implementation of the first aspect, after the sending the verification information to the detection server, the method further includes: obtaining at least one detection item for the fault detection from the detection server when verification performed by the detection server on the verification information by using preset verification information succeeds, where the at least one detection item is selected by the user in a detection item generation interface, and the detection item generation interface further includes a control used to direct the user to set the preset verification information.

That is, when the user may set at least one detection item and set the verification information on the detection server, the electronic terminal obtains the at least one detection item from the detection server, so that the user customizes the detection item for the electronic terminal and sets the verification information on the detection server.

According to the sixth possible implementation of the first aspect, in a seventh possible implementation of the first aspect, after the obtaining a detection item list for the fault detection from the detection server when verification performed by the detection server on the verification information by using preset verification information succeeds, the method further includes: screening the at least one detection item by using the detection configuration file, and determining a final detection item that can be performed on the electronic terminal.

That is, after obtaining the at least one detection item, the electronic terminal may screen the at least one detection item by using the detection configuration file, and determine a detection item suitable for the electronic terminal, to improve detection efficiency.

According to the seventh possible implementation of the first aspect, in an eighth possible implementation of the first aspect, after the determining a final detection item that can be performed on the electronic terminal, the method further includes: performing detection on the electronic terminal based on the final detection item, to obtain a detection result; and sending the detection result to the detection server.

That is, the electronic terminal may send the detection result for the detection performed based on the final detection item to the detection server, to complete the fault detection on the electronic terminal.

According to the fourth possible implementation and more possible implementations of the first aspect, in a ninth possible implementation of the first aspect, the detection configuration file includes a region that supports the fault detection, a type of the electronic terminal, and a detection item.

That is, whether the electronic terminal supports the fault detection may be determined based on the region that supports the fault detection and the type of the electronic terminal that supports the fault detection that are in the configuration file, and a detection item that can be supported by the electronic terminal may be determined based on the detection item, so that the region and the detection item for the fault detection can be effectively controlled, and the fault detection is more secure and reliable.

According to any one of the first aspect or the implementations of the first aspect, after the sending the detection result to the detection server, the method further includes: deleting detection data related to the fault detection.

That is, the detection data is deleted, so that storage space of the electronic terminal can be saved, and the fault detection can be more secure.

According to a second aspect, an embodiment of this application provides a fault detection method. The method includes: determining a detection configuration file for an electronic terminal on which fault detection is to be directly performed without entering an unlocking password; and sending the detection configuration file to the electronic terminal.

That is, in the fault detection method, the detection configuration file for the electronic terminal may be sent to the electronic terminal, so that the electronic terminal performs the fault detection based on the detection configuration file. In this way, the fault detection may be automatically implemented by using various components of the electronic terminal, and a proper detection item may be determined based on the detection configuration file.

According to the second aspect, in a first possible implementation of the fault detection method, the detection configuration file includes a region that supports performing the fault detection on the electronic terminal, a type of the electronic terminal, and a detection item.

That is, whether the electronic terminal supports the fault detection may be determined based on the region that supports the fault detection and the type of the electronic terminal that supports the fault detection that are in the configuration file, and a detection item that can be supported by the electronic terminal may be determined based on the detection item, so that the region and the detection item for the fault detection can be effectively controlled, and the fault detection is more secure and reliable.

According to the second aspect or the first possible implementation of the second aspect, in a second possible implementation of the second aspect, after the sending the detection configuration file to the electronic terminal, the method further includes: receiving, when a detection item generation interface is displayed, at least one detection item selected by a user in the detection item generation interface and preset verification information set by the user for the fault detection.

That is, the user may select the at least one detection item in the detection item generation interface and set the preset verification information, so that the user can more intuitively view the detection item that is set. In addition, the preset verification information is set, so that a person who sets the detection item is controlled, to effectively prevent an unrelated person from randomly performing fault detection on the electronic terminal.

According to the second possible implementation of the second aspect, in a third possible implementation of the second aspect, after the receiving at least one detection item selected by a user in the detection item generation interface and verification information set by the user for the fault detection, the method further includes: verifying, by using the preset verification information, verification information that is entered by the user on the electronic terminal and that is received from the electronic terminal; and sending the at least one detection item to the electronic terminal after the verification succeeds.

That is, in the fault detection method, the at least one detection item is sent to the electronic terminal only after the verification succeeds, to ensure security and effectiveness of the fault detection.

According to the third possible implementation of the second aspect, in a fourth possible implementation of the second aspect, after the sending the at least one detection item to the electronic terminal, the method further includes: receiving a detection result for the fault detection from the electronic terminal.

In this way, the user can directly view the detection result in an interface of the electronic terminal, to improve user experience.

According to a third aspect, an embodiment of this application provides an electronic terminal. The terminal device may perform the fault detection method according to the first aspect or one or more of the plurality of possible implementations of the first aspect and the fault detection method according to the second aspect or one or more of the plurality of possible implementations of the second aspect.

According to a fourth aspect, an embodiment of this application provides a non-volatile computer-readable storage medium. The non-volatile computer-readable storage medium stores computer program instructions. When the computer program instructions are executed by a processor, the fault detection method according to the first aspect or one or more of the plurality of possible implementations of the first aspect and the fault detection method according to the second aspect or one or more of the plurality of possible implementations of the second aspect are implemented.

According to a fourth aspect, an embodiment of this application provides a computer program product, including computer-readable code or a non-volatile computer-readable storage medium that carries computer-readable code. When the computer-readable code is run in an electronic device, a processor in the electronic device performs the fault detection method according to the first aspect or one or more of the plurality of possible implementations of the first aspect and the fault detection method according to the second aspect or one or more of the plurality of possible implementations of the second aspect.

These aspects and other aspects of this application are more concise and more comprehensible in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1a is a schematic diagram of a user interface for performing fault detection by an electronic terminal in the conventional technology;
FIG. 1b is a schematic diagram of another user interface for performing fault detection by an electronic terminal in the conventional technology;
FIG. 1c is a schematic diagram of another user interface for performing fault detection by an electronic terminal in the conventional technology;
FIG. 2 is a schematic diagram of a structure of a terminal device according to an embodiment of this application;
FIG. 3 is a block diagram of a software structure of a terminal device according to an embodiment of this application;
FIG. 4 is a schematic diagram of performing fault detection by using an electronic terminal according to an embodiment of this application;
FIG. 5 is a schematic diagram of jointly performing fault detection by an electronic terminal and a detection server according to an embodiment of this application;
FIG. 6 is a flowchart of steps of a fault detection method performed on an electronic terminal side according to an embodiment of this application;
FIG. 7 is a flowchart of steps of a fault detection method performed by a detection server according to an embodiment of this application;
FIG. 8 is a schematic diagram of performing a first user input on an electronic terminal according to an embodiment of this application;
FIG. 9a is a schematic diagram of a user interface existing during fault detection by an electronic terminal according to an embodiment of this application;
FIG. 9b is a schematic diagram of another user interface existing during fault detection by an electronic terminal according to an embodiment of this application;
FIG. 9c is a schematic diagram of another user interface existing during fault detection by an electronic terminal according to an embodiment of this application;
FIG. 10 is a schematic diagram of a user interface existing during fault detection by a detection server according to an embodiment of this application;
FIG. 11 is a block diagram of an electronic terminal according to an embodiment of this application; and
FIG. 12 is a block diagram of an electronic terminal according to another embodiment of this application.

### DESCRIPTION OF EMBODIMENTS

The following describes various example embodiments, features, and aspects of this application in detail with reference to the accompanying drawings. Same reference numerals in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment or illustration". Any embodiment described as an "example" is not necessarily explained as being superior or better than other embodiments.

In addition, to better describe this application, numerous specific details are provided in the following specific implementations. A person skilled in the art should understand that this application can also be implemented without some specific details. In some embodiments, methods, means, elements, and circuits that are well-known to a person skilled in the art are not described in detail, so that the subject matter of this application is highlighted.

An electronic terminal in this application may include, for example, a mobile phone, a tablet computer, a wearable device (for example, a watch, a band, or a smart helmet), a vehiclemounted device, a smart home device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A mobile phone is used as an example in some embodiments of this application. It may be understood that these embodiments may also be applied to another type of mobile terminal.

An application (application, app) in this application may be briefly referred to as an application, and is a software program that can implement one or more specific functions. Usually, a plurality of applications, for example, a sports application, a music application, and a dictionary application, may be installed in a mobile terminal. It may be understood that the application may be an application installed before the mobile terminal is delivered, or may be an application downloaded from a network or obtained from another electronic device by a user in a process of using the mobile terminal. A third-party application is usually an application developed by a nonmobile terminal manufacturer. For example, for a Huawei mobile phone, the third-party application may be an application developed by a developer other than Huawei.

A user in this application may include an owner of an electronic terminal, a maintenance person who performs fault detection on an electronic terminal, or the like. For ease of description, in the following, the owner of the electronic terminal or a person who sends the electronic terminal to a service center is collectively referred to as a user, and the maintenance person who performs fault detection on the electronic terminal is collectively referred to as a detection user.

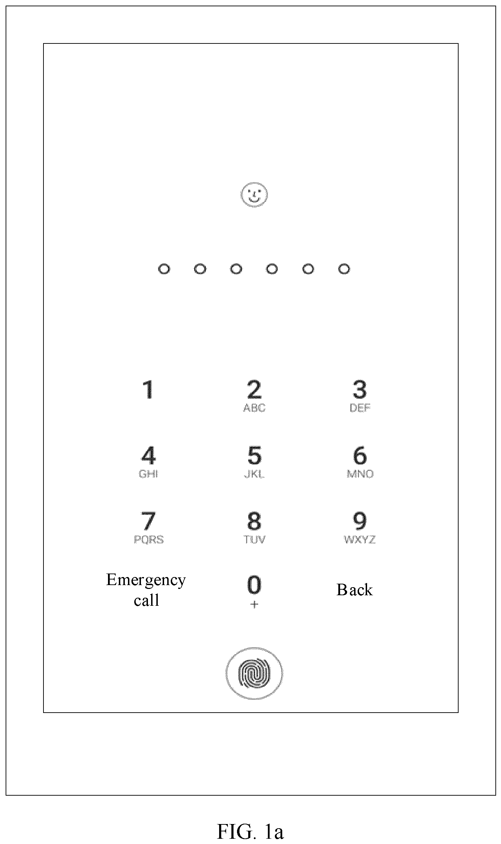

In consideration of security, privacy, or aesthetics, a lock screen may be set for a mobile phone, and a function of the mobile terminal can be normally used only after the lock screen that is set is unlocked. Otherwise, a function of the mobile terminal cannot be used or only some functions can be used. As shown in FIG. 1a, when a lock screen password is set, and when a screen of the mobile phone is turned on, an unlocking interface is displayed on the screen of the mobile phone, and a user needs to enter an unlocking password to unlock the screen, so as to enter a home screen/application interface of the mobile phone to perform a normal operation.

A plurality of lock screen forms may be set for an electronic terminal, and usually may be classified into a system lock screen and a third-party lock screen. The system lock screen is a lock screen provided by a system of the mobile terminal, and the third-party lock screen is a lock screen provided by a third-party application installed in the mobile terminal. The system lock screen may further include a secure lock screen and a non-secure lock screen. The secure lock screen may be a pattern-based lock screen, a number-based lock screen, a gesture-based lock screen, a fingerprint-based lock screen, a face-based lock screen, voiceprint-based unlocking, or a hybrid password-based lock screen (for example, a combination of a number and a letter), has a capability of verifying a user identity, and usually can be unlocked only by a user (an authorized user) who knows a password. The non-secure lock screen is usually a lock screen set for nonsecurity reasons such as aesthetics, does not have a capability of verifying a user identity, and may be unlocked by an unauthorized user. For example, a magazine-based lock screen is a common non-secure lock screen, and a wallpaper similar to a magazine cover is presented on a screen of a mobile phone. Each user, including an authorized user and an unauthorized user, may unlock the non-secure lock screen based on an unlocking prompt. In this case, there is usually a relatively simple unlocking manner, for example, tapping the screen or sliding by a finger (which may be sliding to the left, sliding to the right, sliding upward, sliding downward, sliding obliquely, or the like). A user may set different lock screen forms and combinations thereof based on a requirement of the user. For example, the user may simultaneously set a secure lock screen, a non-secure lock screen, and a third-party lock screen, may set a secure lock screen and a third-party lock screen, may set a non-secure lock screen and a third-party lock screen, or may set only a third-party lock screen.

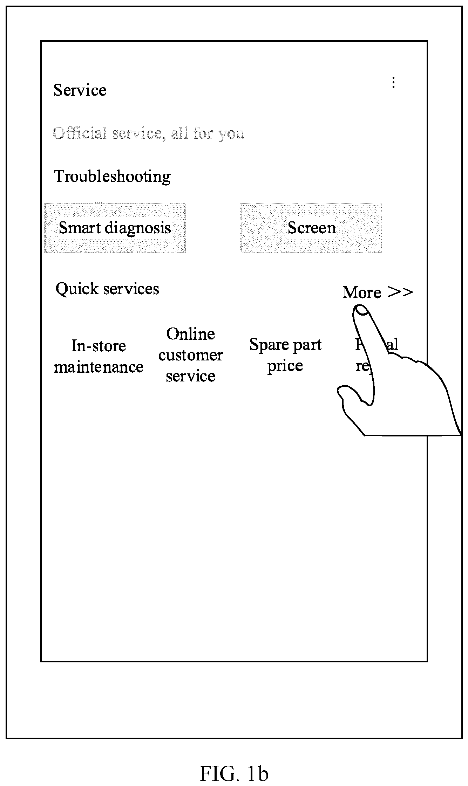

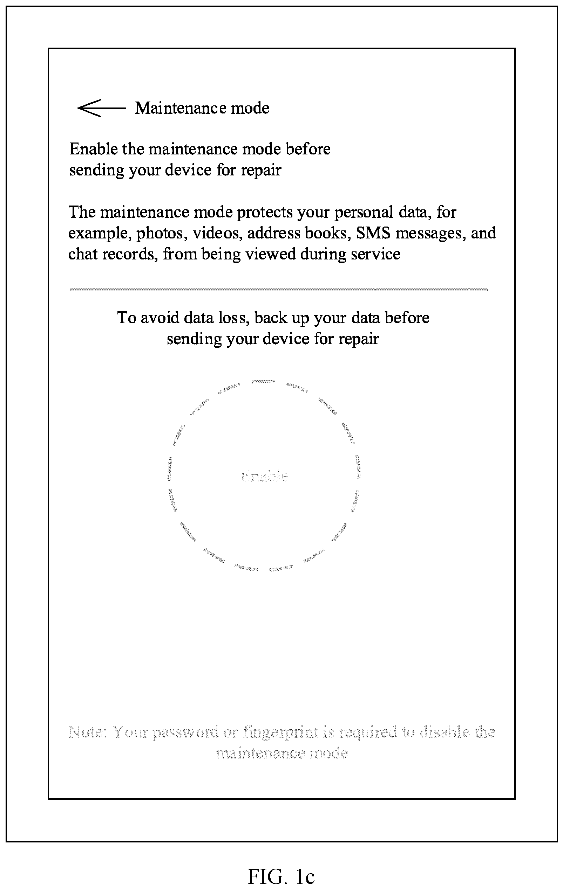

In a scenario in which fault detection needs to be performed, the user needs to enter an unlocking password of a mobile phone in the lock screen interface shown in FIG. 1a, to unlock the mobile phone, and then may enable a maintenance mode by touching a related application in a user interface of the mobile phone. As shown in FIG. 1b, the user may touch a "service" control in the user interface, and after entering a user interface corresponding to "service", start a fault detection application in the mobile phone by selecting a control that indicates fault detection in the user interface. Then, the user may touch, in an interface shown in FIG. 1c, "enable" displayed in the interface, so that the mobile phone enters the "maintenance mode".

In the maintenance mode, private data in the mobile phone is isolated, to ensure, to a maximum extent, that privacy of the user is not disclosed. The private data includes related data such as an album, an email, a memo, an address book, a payment application, and a chat application. In implementation, the private data may be encrypted by using a security algorithm, to comprehensively isolate the private data.

However, in the maintenance mode described above, the user needs to directly send or mail the mobile phone to a fault detection center, and a detection user in the center performs fault detection. Therefore, the user needs to provide a lock screen password to the detection user. However, in this case, a possibility of disclosure is greatly increased. Based on the foregoing considerations, some users restore mobile phones to factory settings to clear private data, and then send the mobile phones to the detection center. Consequently, this part of private data is irreversibly lost, the users need to back up data in advance, and the users need to pay again to download some paid applications.

To resolve the foregoing technical problem, this application provides a fault detection method. According to the fault detection method in the embodiments of this application, an electronic terminal can directly start a fault detection application and display a fault detection interface on the electronic terminal without entering an unlocking password, to reduce a probability of privacy disclosure and improve maintenance efficiency.

The electronic terminal in this application may be a device having a wireless connection function. The wireless connection function means that the electronic terminal may be connected to another terminal device in a wireless connection manner such as Wi-Fi or Bluetooth. The terminal device in this application may also have a function of communicating in a wired connection manner. The electronic terminal in this application may include a touchscreen, or may not include a touchscreen, and the terminal device may be controlled by performing a tap or sliding operation on a display, or in another manner by using a finger, a stylus, or the like.

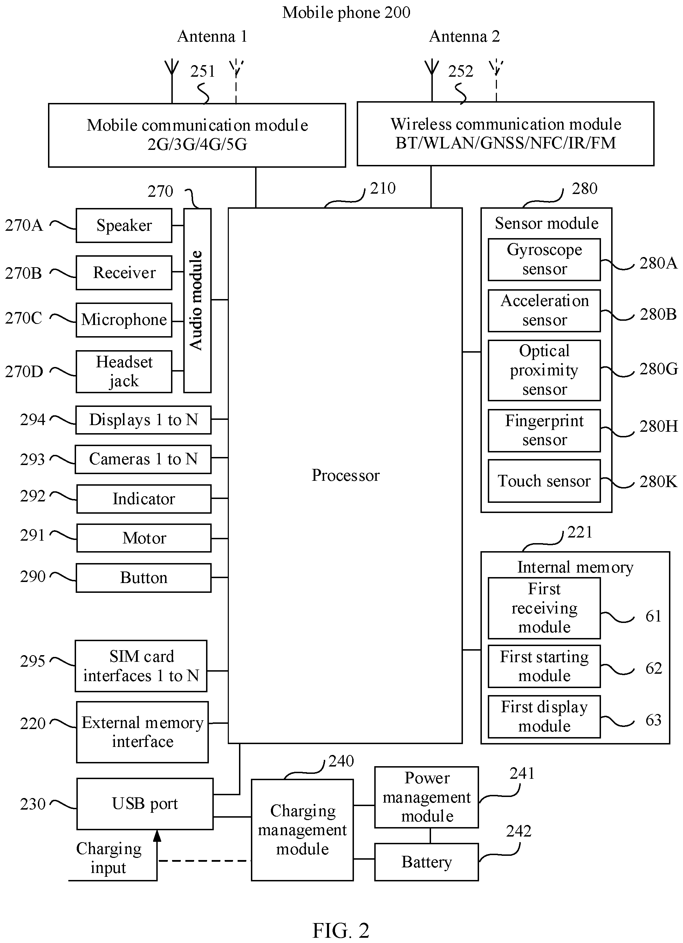

FIG. 2 is a schematic diagram of a structure of a terminal device according to an embodiment of this application. For example, the terminal device is a mobile phone. FIG. 2 is a schematic diagram of a structure of a mobile phone 200.

The mobile phone 200 may include a processor 210, an external memory interface 220, an internal memory 221, a USB port 230, a charging management module 240, a power management module 241, a battery 242, an antenna 1, an antenna 2, a mobile communication module 251, a wireless communication module 252, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a gyroscope sensor 280A, an acceleration sensor 280B, an optical proximity sensor 280G, a fingerprint sensor 280H, and a touch sensor 280K (certainly, the mobile phone 200 may further include other sensors such as a temperature sensor, a pressure sensor, a distance sensor, a magnetic sensor, an ambient light sensor, a barometric pressure sensor, and a bone conduction sensor, which are not shown in the figure).

It may be understood that the structure shown in this embodiment of this application constitutes no specific limitation on the mobile phone 200. In some other embodiments of this application, the mobile phone 200 may include more or fewer components than those shown in the figure, some components may be combined, some components may be split, or different component arrangements may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the mobile phone 200. The controller may generate an operation control signal based on instruction operation code and a time sequence signal, to control instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. Therefore, repeated access is avoided, and a waiting time of the processor 210 is reduced, and therefore system efficiency is improved.

The processor 210 may run the fault detection method provided in the embodiments of this application, so that a fault detection application is directly started without entering an unlocking password. The processor 210 may include different components. For example, when a CPU and a GPU are integrated, the CPU and the GPU may cooperate to perform the fault detection method provided in the embodiments of this application. For example, in the fault detection method, some algorithms are performed by the CPU, and the other algorithms are performed by the GPU, to obtain relatively high processing efficiency.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diodes, QLED), or the like. In some embodiments, the mobile phone 200 may include one or N displays 294, where N is a positive integer greater than 1. The display 294 may be configured to display information entered by a user or information provided to a user, and various graphical user interfaces (graphical user interface, GUI). For example, the display 294 may display a photo, a video, a web page, or a file. For another example, the display 294 may display a graphical user interface. The graphical user interface includes a status bar, a navigation bar that can be hidden, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that in some embodiments, the status bar may further include a Bluetooth icon, a Wi-Fi icon, an icon of an externally connected device, and the like. It may be further understood that in some other embodiments, the graphical user interface may further include a dock bar, and the dock bar may include an icon of a commonly used application and the like. After the processor 210 detects a touch event performed by a user on an application icon by using a finger (a stylus or the like), in response to the touch event, the processor 210 launches a user interface of an application corresponding to the application icon, and displays the user interface of the application on the display 294.

In this embodiment of this application, the display 294 may be one integrated flexible display, or may be a spliced display including two rigid screens and one flexible screen located between the two rigid screens.

After the processor 210 performs the fault detection method provided in the embodiments of this application, the terminal device may establish a connection to another terminal device by using the antenna 1, the antenna 2, or the USB port, and according to the fault detection method provided in the embodiments of this application, transmit data and control the display 294 to display a corresponding graphical user interface.

The camera 293 (a front-facing camera, a rear-facing camera, or a camera that may serve as both a front-facing camera and a rear-facing camera) is configured to capture a static image or a video. Usually, the camera 293 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 221 may be configured to store computer-executable program code, and the executable program code includes instructions. The processor 210 runs the instructions stored in the internal memory 221, to perform various function applications and data processing of the mobile phone 200. The internal memory 221 may include a program storage area and a data storage area. The program storage area may store code of an operating system, an application (for example, a camera application or a WeChat application), and the like. The data storage area may store data (for example, an image or a video collected by the camera application) and the like created during use of the mobile phone 200.

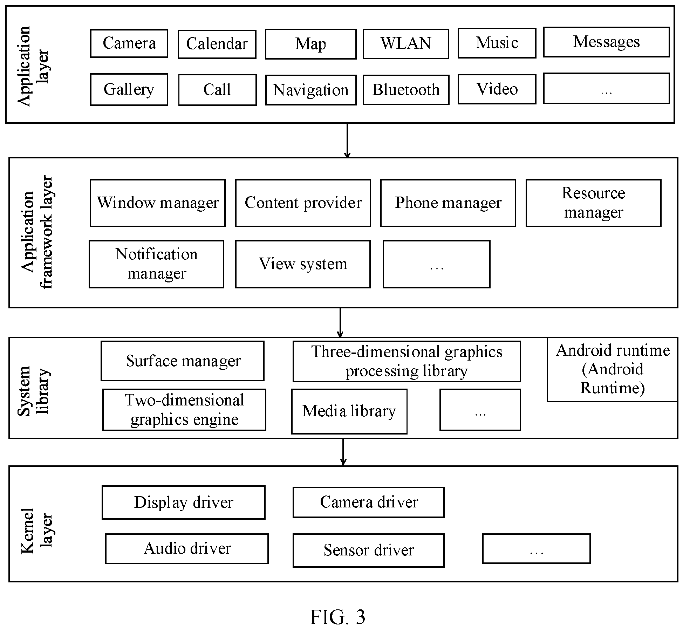

The internal memory 221 may further store one or more computer programs 1310 corresponding to the fault detection method provided in the embodiments of this application. The one or more computer programs 1304 are stored in the memory 221, and are configured to be executed by the one or more processors 210. The one or more computer programs 1310 include instructions. The instructions may be used to perform steps in embodiments corresponding to FIG. 3 to FIG. 8, FIG. 9a to FIG. 9c, or FIG. 10. The computer program 1310 may include a first receiving module 61, a first starting module 62, and a first display module 63. The first receiving module 61 is configured to receive, in a state in which an electronic terminal displays a first interface, a first user input used to perform fault detection on the electronic terminal. The first starting module 62 is configured to start a fault detection application in response to the first user input. The first display module 63 is configured to display a fault detection interface of the fault detection application.

In addition, the internal memory 221 may include a high-speed random access memory, and may further include a non-volatile memory, for example, at least one magnetic disk storage device, a flash storage device, or a universal flash storage (universal flash storage, UFS).

Certainly, the code of the fault detection method provided in the embodiments of this application may alternatively be stored in an external memory. In this case, the processor 210 may run, by using the external memory interface 220, the code of the fault detection method stored in the external memory.

A function of the sensor module 280 is described below.

The gyroscope sensor 280A may be configured to determine a movement posture of the mobile phone 200. In some embodiments, angular velocities of the mobile phone 200 around three axes (namely, axes x, y, and z) may be determined by using the gyroscope sensor 280A. That is, the gyroscope sensor 280Amay be configured to detect a current movement status of the mobile phone 200, for example, a shaking state or a static state.

When the display in this embodiment of this application is a foldable screen, the gyroscope sensor 280A may be configured to detect a folding or unfolding operation performed on the display 294. The gyroscope sensor 280A may report the detected folding or unfolding operation as an event to the processor 210, to determine whether the display 294 is in a folded state or an unfolded state.

The acceleration sensor 280B may detect magnitudes of acceleration of the mobile phone 200 in various directions (usually on three axes). That is, the gyroscope sensor 280A may be configured to detect a current movement status of the mobile phone 200, for example, a shaking state or a static state. When the display in this embodiment of this application is a foldable screen, the acceleration sensor 280B may be configured to detect a folding or unfolding operation performed on the display 294. The acceleration sensor 280B may report the detected folding or unfolding operation as an event to the processor 210, to determine whether the display 294 is in a folded state or an unfolded state.

The optical proximity sensor 280G may include a light-emitting diode (LED) and an optical detector, for example, a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, it may be determined that there is an object near the mobile phone. When insufficient reflected light is detected, the mobile phone may determine that there is no object near the mobile phone. When the display in this embodiment of this application is a foldable screen, the optical proximity sensor 280G may be disposed on a first screen of the foldable display 294, and the optical proximity sensor 280G may detect a magnitude of an angle between the first screen and a second screen in a folded or unfolded state based on an optical path difference between infrared signals.

The gyroscope sensor 280A (or the acceleration sensor 280B) may send detected movement status information (for example, the angular velocity) to the processor 210. The processor 210 determines, based on the movement status information, whether the mobile phone is currently in a handheld state or a tripod state (for example, when the angular velocity is not 0, it indicates that the mobile phone 200 is in the handheld state).

The fingerprint sensor 280H is configured to collect a fingerprint. The mobile phone 200 may use a feature of the collected fingerprint to implement fingerprint-based unlocking, application lock access, fingerprint-based photographing, fingerprint-based call answering, and the like.

The touch sensor 280K is also referred to as a "touch panel". The touch sensor 280K may be disposed on the display 294, and the touch sensor 280K and the display 294 form a touchscreen, which is also referred to as a "touch screen". The touch sensor 280K is configured to detect a touch operation performed on or near the touch sensor 280K. The touch sensor may transfer the detected touch operation to the application processor to determine a type of the touch event. A visual output related to the touch operation may be provided by using the display 294. In some other embodiments, the touch sensor 280K may alternatively be disposed on a surface of the mobile phone 200, and is located at a location different from that of the display 294.

For example, the display 294 of the mobile phone 200 displays a home screen, and the home screen includes icons of a plurality of applications (for example, the camera application and the WeChat application). The user taps an icon of the camera application on the home screen by using the touch sensor 280K, to trigger the processor 210 to start the camera application and turn on the camera 293. The display 294 displays an interface of the camera application, for example, a viewfinder interface.

A wireless communication function of the mobile phone 200 may be implemented by using the antenna 1, the antenna 2, the mobile communication module 251, the wireless communication module 252, the modem processor, the baseband processor, and the like.

The antenna 1 and the antenna 2 are configured to transmit and receive an electromagnetic wave signal. Each antenna in the mobile phone 200 may be configured to cover one or more communication bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 251 may provide a wireless communication solution that includes 2G/3G/4G/5G or the like and that is applied to the mobile phone 200. The mobile communication module 251 may include at least one filter, a switch, a power amplifier, a low noise amplifier (low noise amplifier, LNA), and the like. The mobile communication module 251 may receive an electromagnetic wave through the antenna 1, perform processing such as filtering or amplification on the received electromagnetic wave, and transmit the electromagnetic wave to the modem processor for demodulation. The mobile communication module 251 may further amplify a signal obtained after modulation by the modem processor, and convert the signal into an electromagnetic wave for radiation through the antenna 1. In some embodiments, at least some functional modules in the mobile communication module 251 may be disposed in the processor 210. In some embodiments, at least some functional modules in the mobile communication module 251 may be disposed in a same device as at least some modules in the processor 210. In this embodiment of this application, the mobile communication module 251 may be further configured to exchange information with another terminal device. For example, the mobile communication module 251 may obtain a detection configuration file from a detection server after accessing a trusted Wi-Fi hotspot.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent device. In some other embodiments, the modem processor may be independent of the processor 210, and is disposed in a same device as the mobile communication module 251 or another functional module.

The wireless communication module 252 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the mobile phone 200. The wireless communication module 252 may be one or more devices into which at least one communication processing module is integrated. The wireless communication module 252 receives an electromagnetic wave through the antenna 2, performs frequency modulation and filtering processing on an electromagnetic wave signal, and sends a processed signal to the processor 210. The wireless communication module 252 may further receive a to-be-sent signal from the processor 210, perform frequency modulation and amplification on the signal, and convert the signal into an electromagnetic wave for radiation through the antenna 2. In this embodiment of this application, the wireless communication module 252 is configured to transmit data to another terminal device under control of the processor 210. For example, when the processor 210 runs the fault detection method provided in the embodiments of this application, the processor may control the wireless communication module 252 to obtain a detection configuration file from a detection server, and send verification information to the detection server, and may further receive a detection item sent by the detection server to the electronic terminal after determining, based on the verification information, that verification succeeds, and then control the display 294 to display a detection process, to provide intuitive visual feedback to the user and improve user experience.

In addition, the mobile phone 200 may implement an audio function, for example, music playing and recording, by using the audio module 270, the speaker 270A, the receiver 270B, the microphone 270C, the headset jack 270D, the application processor, and the like. In addition, the audio module 270 may further include a volume control button, configured to adjust volume of an audio output. The mobile phone 200 may receive an input from the button 290, and generate a button signal input related to a user setting and function control of the mobile phone 200.

According to an example embodiment of this application, the mobile phone may receive an operation performed by the user or a detection user on the volume control button by using the button 290. In addition, the mobile phone may further receive an operation performed by the user or the detection user on a power button by using the button 290, to power on or power off the mobile phone. In addition, the button 290 may further receive a vibration prompt (for example, an incoming call vibration prompt) that may be generated by the mobile phone 200 by using the motor 291. The indicator 292 in the mobile phone 200 may be an indicator light, and may be configured to indicate a charging status and a power change, or may be configured to indicate a message, a missed call, a notification, and the like. The SIM card interface 295 in the mobile phone 200 is configured to be connected to a SIM card. The SIM card may be inserted into the SIM card interface 295 or removed from the SIM card interface 295, to come into contact with and be separated from the mobile phone 200.

It should be understood that in an actual application, the mobile phone 200 may include more or fewer components than those shown in FIG. 2. This is not limited in this embodiment of this application. The mobile phone 200 shown in the figure is merely an example, and the mobile phone 200 may include more or fewer components than those shown in the figure, two or more components may be combined, or different component configurations may be used. Components shown in the figure may be implemented in hardware including one or more signal processing and/or application-specific integrated circuits, software, or a combination of hardware and software.

A software system of a terminal device may use a layered architecture, an event-driven architecture, a microkernel architecture, a micro service architecture, or a cloud architecture. In this embodiment of this application, an Android system of a layered architecture is used as an example to describe a software structure of the terminal device.

FIG. 3 is a block diagram of a software structure of a terminal device according to an embodiment of this application.

In a layered architecture, software is divided into several layers, and each layer has a clear role and task. The layers communicate with each other through a software interface. In some embodiments, an Android system is divided into four layers: an application layer (namely, an app layer), an application framework layer (namely, a framework layer), an Android runtime (Android runtime) and system library, and a kernel layer from top to bottom.

The application layer may include a series of application packages. As shown in FIG. 3, the application packages may include applications such as Phone, Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a SMS message notification icon may include a view for displaying text and a view for displaying a picture.

The phone manager is configured to provide a communication function of the terminal device, for example, management of call statuses (including answering, declining, and the like).

The resource manager provides various resources such as a localized character string, an icon, a picture, a layout file, and a video file for an application.

The notification manager enables an application to display notification information in a status bar, may be configured to convey a notification message, and may automatically disappear after a short pause without requiring user interaction. For example, the notification manager is configured to notify download completion, provide a message notification, and the like. The notification manager may alternatively be a notification that appears in a top status bar of the system in a form of a graph or scroll bar text, for example, a notification of an application running on the background or a notification that appears on a screen in a form of a dialog window. For example, text information is displayed in the status bar, a prompt tone is made, the terminal device vibrates, or the indicator light flashes.

In general, the framework layer provides a developer with an API framework that can be used to fully access an application. Specifically, the framework layer provides a very large quantity of APIs for developing an application, and an app that meets a related service requirement may be constructed by invoking a corresponding API.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run in the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like. The 2D graphics engine is a drawing engine for 2D drawing. The kernel layer is a layer between hardware and software. The kernel layer includes at least a display driver, a camera driver, an audio driver, and a sensor driver.

For example, a fault detection application is installed at an application layer of a mobile phone 100. When detecting a trigger operation of tapping, by a user, an icon of the fault detection application on a desktop, the mobile phone 100 triggers the fault detection application to invoke a corresponding API at a framework layer to generate an action event (ActionEvent). The action event indicates that the icon of the fault detection application is tapped. Further, the framework layer may generate one or more target tasks for processing the action event, for example, a task of starting a related component of the fault detection application to display home page content.

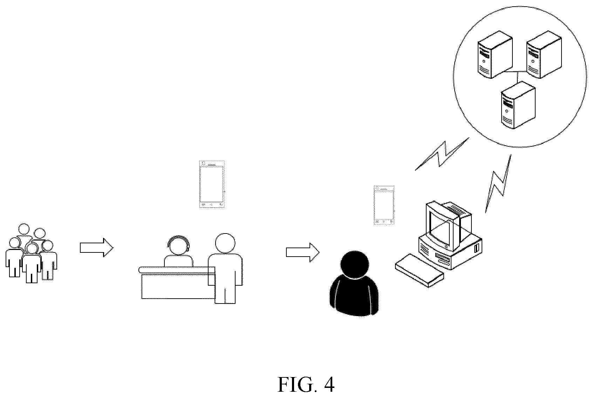

FIG. 4 is a scenario diagram of performing fault detection by using an electronic terminal according to an embodiment of this application.

As shown in FIG. 4, when a user needs to perform fault detection or maintenance detection on a mobile phone, the user may take the mobile phone to a convenient mobile phone maintenance center, or mail the mobile phone to a trusted mobile phone maintenance center. It should be noted that the fault detection or maintenance detection herein does not indicate that the mobile phone of the user is definitely faulty or definitely needs to be maintained, and there may be a case in which the user expects to learn of a current running status of the mobile phone, and therefore the mobile phone is taken to the mobile phone maintenance center.

It should be noted that a fault detection mode or a maintenance detection mode described in a related technology needs to be performed by a detection person in the mobile phone maintenance center, and a common user is not authorized to perform fault detection or maintenance detection on the mobile phone. The mobile phone maintenance center herein is a maintenance center authorized by a mobile phone manufacturer or a maintenance center directly operated by a mobile phone manufacturer.

As shown in FIG. 4, after obtaining the mobile phone, the detection person should first determine whether the user of the mobile phone has signed a maintenance privacy agreement, and if the user has not signed the maintenance privacy agreement, may direct the user to fill in the maintenance privacy agreement online or in writing. Then, the detection user may directly start a fault detection application in the mobile phone by using the fault detection method in this application, and may view that the mobile phone displays a fault detection interface of the fault detection application. In this period, the detection user may further display and select, by using an electronic terminal that is connected to a detection server and that is shown in FIG. 4, verification information and a detection item to be set for the mobile phone.

It should be noted that the detection server shown in FIG. 4 may indicate a single server or may indicate a server cluster connected based on a specific connection rule, and the server cluster may include a physical server or a virtual server. The electronic terminal connected to the detection server may display an interface generated through WebUI, so that the detection person performs an operation on various controls in the interface.

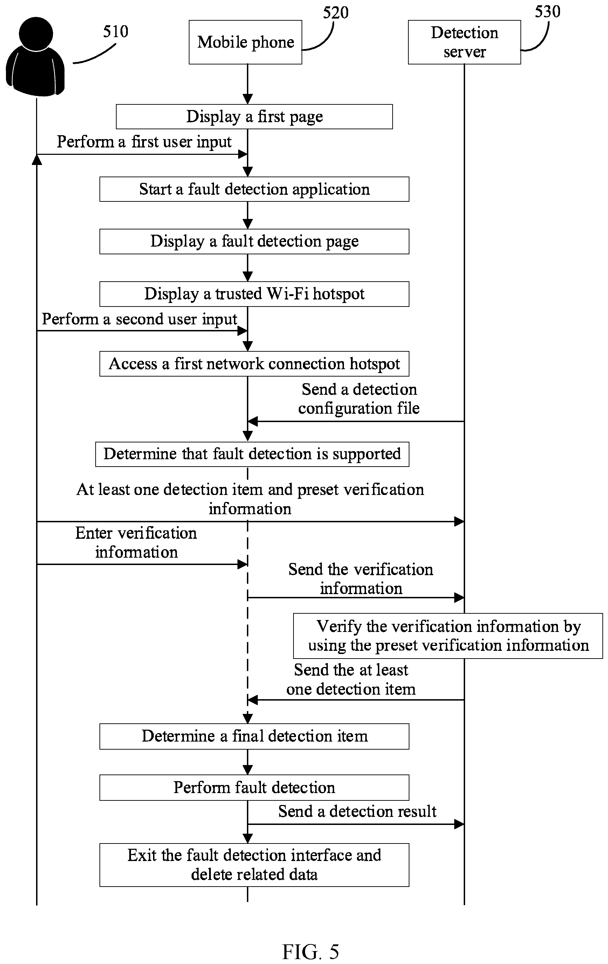

A specific process is described below in detail with reference to FIG. 5. FIG. 5 is a schematic diagram of jointly performing fault detection by an electronic terminal and a detection server according to an embodiment of this application.

A user 510 shown in FIG. 5 indicates a detection user who performs fault detection on a mobile phone. In this case, the mobile phone 520 displays a first interface, that is, the mobile phone 520 is in a running state. The first interface may be a lock screen interface. For example, the first interface may be the interface shown in FIG. la. In this state, the user 510 cannot perform an operation on an application in the mobile phone 520. Alternatively, the first interface may be an application interface presented during execution of various applications by the mobile phone 520. For example, the first interface may be a commodity interface presented when the user 510 purchases a commodity, or a page presented when the user 510 views various mobile phone parameters in the mobile phone 510.

When the mobile phone 520 displays the first interface, the user 510 may perform a first user input. After receiving the first user input, the mobile phone 520 may start a fault detection application in the mobile phone and display a fault detection page. That is, regardless of an interface displayed by the mobile phone 520, the mobile phone 520 may directly invoke a framework layer in the mobile phone to start an existing fault detection application without entering an unlocking password.

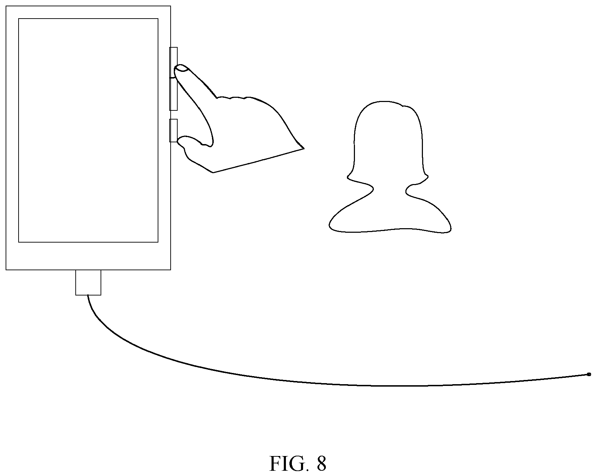

In implementation, the first user input may be shown in FIG. 8, that is, when a universal serial bus (namely, USB) port of the mobile phone is connected, a first user input of pressing both a volume up button and a power button for a preset time period is received. Preferably, the preset time period may be 6 seconds. It should be noted that the first user input is an action preset by a developer. To ensure that the user 510 can perform a fault detection operation on various mobile phones by using the first user input, the first user input is fixedly set by the developer to a same action.

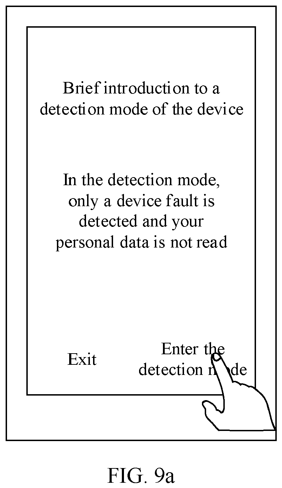

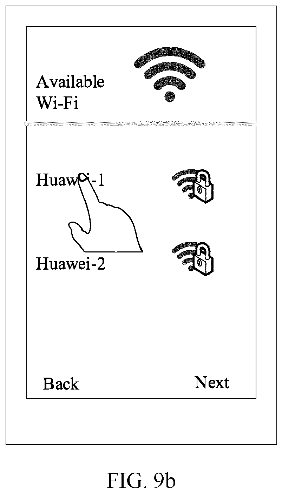

Then, the framework layer obtains the first user input through listening by using a button 290, starts the fault detection application, and displays the fault detection interface corresponding to the fault detection application. As shown in FIG. 9a, the mobile phone may display the fault detection page, and under guidance of a control in the fault detection page, a control that indicates to enter a detection mode is touched, so that the mobile phone may display a communication connection hotspot that can be provided for the user to connect to a network, as shown in FIG. 9b.

In implementation, the fault detection application may search for a Wi-Fi hotspot, and provide a secure Wi-Fi hotspot that is verified as secure in a list of found Wi-Fi hotspots to the user. In an example, Wi-Fi (for example, Huawei Service) whose service set identifier (namely, SSID) is displayed as a specific name in the list of Wi-Fi hotspots may be provided to the user.

As shown in FIG. 5, the user may enter a second user input that includes selecting a Wi-Fi hotspot and entering a password corresponding to the selected Wi-Fi hotspot. After receiving the correct password, the mobile phone accesses the Wi-Fi hotspot. Then, the mobile phone establishes a communication connection to a detection server corresponding to the mobile phone. In implementation, each mobile phone determines, based on a home location (manufacturing region) of the mobile phone, a detection server that matches the mobile phone. Generally, the detection server corresponding to each mobile phone may be determined based on a continent in which the home location of the mobile phone is located.

For example, when a home location of the mobile phone 520 is China, the detection server corresponding to the mobile phone 520 may be a detection server corresponding to Asia. In implementation, the home location of the mobile phone 520 may be determined by automatically reporting the home location by the mobile phone 520 or by searching the mobile phone 520 for the home location, to determine the detection server corresponding to the mobile phone 520.

In implementation, a detection configuration file set by the detection server 530 is a file suitable for various types of mobile phones, and a detection configuration file that meets a requirement for the fault detection in a local region/country may be set based on the home location of each mobile phone, and the detection configuration file may be adjusted. That is, the detection configuration file is a configuration file generated by the detection server through dynamic adjustment.

For example, the detection configuration file may include a region that supports the fault detection, a type of the electronic terminal, and a detection item. The region that supports the fault detection is a region in which the fault detection may be performed according to a local detection policy. As shown in FIG. 5, the mobile phone 520 receives the detection configuration file from the detection server 530. The mobile phone 520 may determine whether a region of the mobile phone is included in the region that supports the fault detection, to determine whether the mobile phone 520 supports the fault detection. As described above, the detection server 530 can obtain only the home location of the mobile phone 520. The home location is usually expressed on the basis of a country or even a continent, and in each continent or even a different region of each country, there may be a contrary result for whether the fault detection is supported. Therefore, after receiving the detection configuration file, the mobile phone 520 needs to determine, based on the region that supports the fault detection in the detection configuration file, whether the mobile phone 520 supports the detection. If the mobile phone 520 does not support the fault detection, the procedure is exited.

The mobile phone 520 is used as an example. The type of the electronic terminal that supports the fault detection may be a model of the mobile phone. A hardware configuration varies with a mobile phone model. For example, some mobile phone models include two SIM cards, and some mobile phone models include a single SIM card. Therefore, the detection server 530 may determine, based on the type of the electronic terminal, whether the detection terminal supports the fault detection and a detection item that supports the fault detection.

The mobile phone 520 is used as an example. The detection item in the detection configuration file is a detection item that can be performed on the mobile phone 520. The detection item herein is a detection item that can be performed on various mobile phones, is not necessarily applicable to the mobile phone 520, and includes battery detection, screen detection, performance detection, or the like. Description is provided below with reference to a specific step of determining a detection item.

After it is determined that the mobile phone 510 supports the fault detection, the user 510 may generate, by using the detection server 530, preset verification information for the fault detection and at least one detection item expected to be performed and detected. The preset verification information is used to ensure that the user who performs the fault detection is an authorized user, in other words, to ensure that the user 510 is a detection user that is authorized to perform the fault detection on the mobile phone 510.

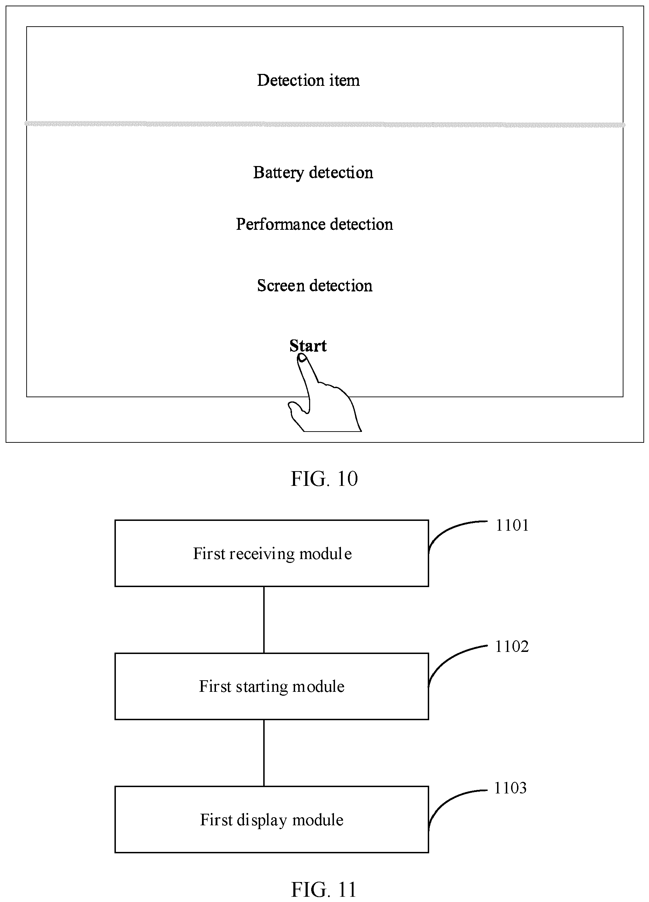

The preset verification information may be a verification code including a number, a letter, a punctuation mark, and the like. In implementation, to facilitate an operation performed by the user 510, processing performed by the detection server may be visually presented to the user 510 by using a WebUI technology. An interface shown in FIG. 10 is an interface generated by the detection server by using the WebUI technology. In the interface, the user 510 may preset the verification information, and select a detection item expected to be performed on the mobile phone 510.

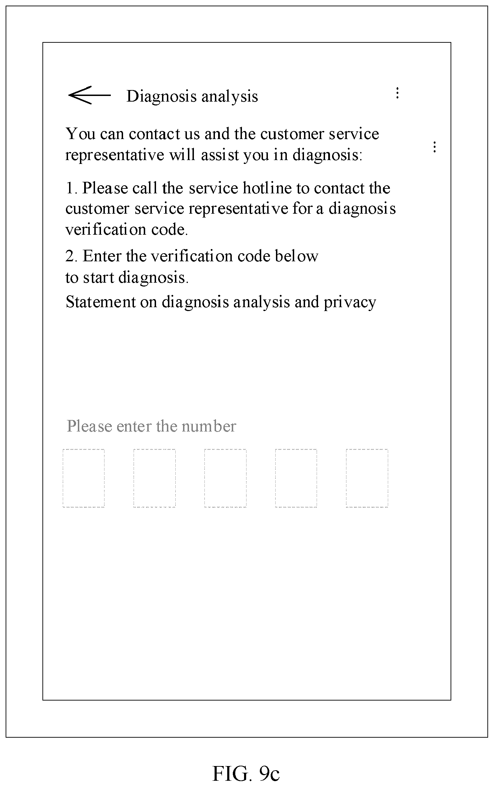

Then, the mobile phone 520 may display an interface shown in FIG. 9c, that is, prompt the user 510 to enter verification information for the fault detection. Then, the user may enter the verification information at a related location in the interface. After receiving the verification information, the mobile phone 520 sends the verification information to the detection server 530. As shown in FIG. 5, the detection server 530 may verify the verification information by using the preset verification information, and after the verification succeeds, send the at least one detection item set by the user to the mobile phone 520. If the verification fails, the user is prompted to enter correct verification information until the verification succeeds.

After receiving the at least one detection item, the mobile phone 520 may screen the at least one detection item by using the detection item in the detection configuration file, and generate a final detection item after the screening. In an example, each detection item in the detection configuration file is set for all mobile phones. When selecting the at least one detection item, the user 510 does not consider whether the detection item can be detected on the mobile phone 520, and considers only a detection item expected to be detected.

Therefore, after the at least one detection item is sent to the mobile phone 520, the mobile phone 520 screens these detection items. In an example, the mobile phone 520 may screen these detection items based on the detection configuration file. Specifically, the mobile phone 520 may obtain information, including a hardware configuration, software installation information, and the like of the mobile phone 510, related to these detection items, and then screen these detection items by using the information, to screen out a detection item that does not meet the fault detection, and determine the final detection item. For example, the mobile phone 520 may obtain the model of the mobile phone 520, determine, based on the model of the mobile phone 520, a detection item list supported by the model of the mobile phone 520, screen the at least one detection item by using the detection item list, and determine the final detection item for the mobile phone 520.

In implementation, if it is determined that all detection items do not support detection, the procedure is exited.

Then, the fault detection application in the mobile phone 520 may perform fault detection on the mobile phone 520 based on the final detection item, and send a detection result of the fault detection to the detection server.

In implementation, after completing the detection, the mobile phone 520 may send the detection result to the detection server. Then, the mobile phone 520 may be controlled to exit the fault detection page and be disconnected from the accessed Wi-Fi hotspot, and detection data related to the fault detection is deleted.

To better describe an example embodiment of this application, steps respectively performed by an electronic terminal side and a detection server side are separately described below in detail.

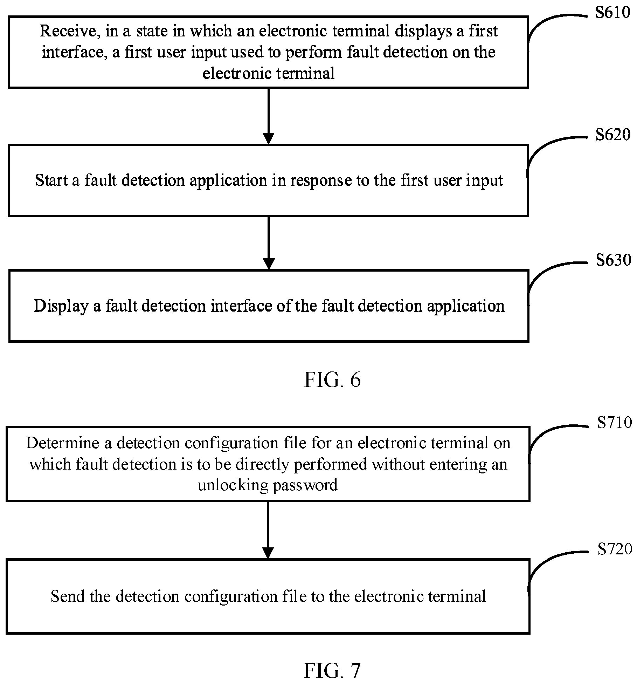

FIG. 6 is a flowchart of steps of a fault detection method performed on an electronic terminal side according to an embodiment of this application.

As shown in FIG. 6, in step S610, in a state in which an electronic terminal displays a first interface, a first user input used to perform fault detection on the electronic terminal is received. This specifically includes: when it is detected that a universal serial bus port of the electronic terminal is connected, receiving the first user input of pressing both a volume up button and a power button for a preset time period.

In step S620, a fault detection application is started in response to the first user input.

In step S630, a fault detection interface of the fault detection application is displayed.

Optionally, the first interface includes a lock screen interface of the electronic terminal in a screen locked state or an application interface presented during execution of an application by the electronic terminal.

Optionally, after the displaying a fault detection interface of the fault detection application, the method further includes: displaying a list of secure network connection hotspots that are verified as secure in found network connection hotspots; receiving a second user input, where the second user input includes selecting a first network connection hotspot from the list of network connection hotspots and entering a connection password of the first network connection hotspot; and accessing the first network connection hotspot in response to the second user input.

Optionally, after the accessing the first network connection hotspot, the method further includes: obtaining a detection configuration file for the electronic terminal from a detection server corresponding to the electronic terminal; and determining, by using the detection configuration file, that the electronic terminal supports the fault detection.

Optionally, after the determining that the electronic terminal supports the fault detection, the method further includes: displaying a diagnosis analysis interface used to indicate to enter verification information for the fault detection; receiving the verification information entered by a user in the diagnosis analysis interface; and sending the verification information to the detection server.

Optionally, after the sending the verification information to the detection server, the method further includes: obtaining at least one detection item for the fault detection from the detection server when verification performed by the detection server on the verification information by using preset verification information succeeds, where the at least one detection item is selected by the user in a detection item generation interface, and the detection item generation interface further includes a control used to direct the user to set the preset verification information.

Optionally, after the obtaining at least one detection item for the fault detection from the detection server when verification performed by the detection server on the verification information by using preset verification information succeeds, the method further includes: screening the at least one detection item by using the detection configuration file, and determining a final detection item that can be performed on the electronic terminal.

Optionally, after the determining a final detection item that can be performed on the electronic terminal, the method further includes: performing detection on the electronic terminal based on the final detection item, to obtain a detection result; and sending the detection result to the detection server.

Optionally, the detection configuration file includes a region that supports the fault detection, a type of the electronic terminal, and a detection item.

FIG. 7 is a flowchart of steps of a fault detection method performed by a detection server according to an embodiment of this application.

As shown in FIG. 7, in step S710, a detection configuration file for an electronic terminal on which fault detection is to be directly performed without entering an unlocking password is determined.

In step S720, the detection configuration file is sent to the electronic terminal.

Optionally, the detection configuration file includes a region that supports performing the fault detection on the electronic terminal, a type of the electronic terminal, and a detection item.

Optionally, after the sending the detection configuration file to the electronic terminal, the method further includes: receiving, when a detection item generation interface is displayed, at least one detection item selected by a user in the detection item generation interface and preset verification information set by the user for the fault detection.

Optionally, after the receiving, when a detection item generation interface is displayed, at least one detection item selected by a user in the detection item generation interface and verification information set by the user for the fault detection, the method further includes: verifying, by using the preset verification information, verification information that is entered by the user on the electronic terminal and that is received from the electronic terminal; and sending the at least one detection item to the electronic terminal after the verification succeeds.

Optionally, after the sending the at least one detection item to the electronic terminal after the verification succeeds, the method further includes: receiving a detection result for the fault detection from the electronic terminal.

It may be understood that to implement the foregoing functions, the terminal includes corresponding hardware structures and/or corresponding software modules for performing the functions. It should be readily appreciated by a person skilled in the art that the example units, algorithms, and steps described with reference to the embodiments disclosed in this specification can be implemented in the embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the terminal or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in the embodiments of this application, module division is an example, and is merely logical function division. In actual implementation, another division manner may be used.

When each functional module is obtained through division based on each corresponding function, FIG. 11 is a schematic diagram of a possible structure of an electronic terminal in the foregoing embodiments. The electronic apparatus includes a first receiving module 1101, a first starting module 1102, and a first display module 1103. The first receiving module 1101 is configured to receive, in a state in which the electronic terminal displays a first interface, a first user input used to perform fault detection on the electronic terminal. The first starting module 1102 is configured to start a fault detection application in response to the first user input. The first display module 1103 is configured to display a fault detection interface of the fault detection application.

Optionally, the first interface includes a lock screen interface of the electronic terminal in a screen locked state and/or an application interface presented during execution of an application by the electronic terminal.

Optionally, the first receiving module 1101 is specifically configured to: when it is detected that a universal serial bus port of the electronic terminal is connected, receive the first user input of pressing both a volume up button and a power button for a preset time period.

Optionally, the electronic terminal further includes a network display module, a second receiving module, and a hotspot access module. The network display module is configured to display a list of secure network connection hotspots that are verified as secure in found network connection hotspots. The second receiving module is configured to receive a second user input. The second user input includes selecting a first network connection hotspot from the list of network connection hotspots entering a connection password of the first network connection hotspot. The access module is configured to access the first network connection hotspot in response to the second user input.

Optionally, the electronic terminal further includes a detection configuration file obtaining module and a support module. The detection configuration file obtaining module obtains a detection configuration file for the electronic terminal from a detection server corresponding to the electronic terminal. The support module is configured to determine, by using the detection configuration file, that the electronic terminal supports the fault detection.

Optionally, the electronic terminal further includes a diagnosis analysis interface display module, a verification information receiving module, and a verification information sending module. The diagnosis analysis interface display module is configured to display a diagnosis analysis interface used to indicate to enter verification information for the fault detection. The verification information receiving module is configured to receive the verification information entered by a user in the diagnosis analysis interface. The verification information sending module is configured to send the verification information to the detection server.

Optionally, the electronic terminal further includes a detection item obtaining module. The detection item obtaining module is configured to obtain at least one detection item for the fault detection from the detection server when verification performed by the detection server on the verification information by using preset verification information succeeds. The at least one detection item is selected by the user in a detection item generation interface, and the detection item generation interface further includes a control used to direct the user to set the preset verification information.

Optionally, the electronic terminal further includes a final detection item determining module. The final detection item determining module is configured to: screen the at least one detection item by using the detection configuration file, and determine a final detection item that can be performed on the electronic terminal.

Optionally, the electronic terminal further includes a detection result obtaining module and a detection result sending module. The detection result obtaining module is configured to perform detection on the electronic terminal based on the final detection item, to obtain a detection result. The detection result sending module is configured to send the detection result to the detection server.

Optionally, the detection configuration file includes a region that supports the fault detection, a type of the electronic terminal, and a detection item.

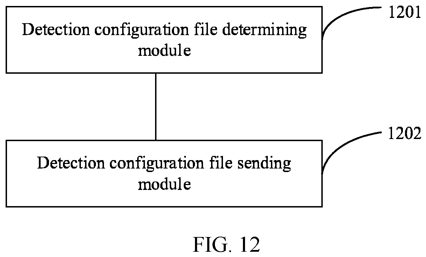

Similarly, FIG. 12 is a block diagram of an electronic terminal according to another embodiment of this application. In implementation, the electronic terminal shown in FIG. 12 is a detection server that performs communication and transmission with the electronic terminal in FIG. 11.

The electronic terminal includes a detection configuration file determining module 1201 and a detection configuration file sending module 1202. The detection configuration file determining module 1201 is configured to determine a detection configuration file for the electronic terminal on which fault detection is to be directly performed without entering an unlocking password. The detection configuration file sending module 1202 is configured to send the detection configuration file to the electronic terminal.

Optionally, the detection configuration file includes a region that supports performing the fault detection on the electronic terminal, a type of the electronic terminal, and a detection item.

The electronic terminal further includes an information receiving module. The information receiving module is configured to receive at least one detection item selected by a user in a detection item generation interface and preset verification information set by the user for the fault detection.

The electronic terminal further includes a verification module and a detection item sending module. The verification module is configured to verify, by using the preset verification information, verification information that is entered by the user on the electronic terminal and that is received from the electronic terminal. The detection item sending module is configured to send the at least one detection item to the electronic terminal after the verification succeeds.

The electronic terminal further includes a detection result receiving module. The detection result receiving module is configured to receive a detection result for the fault detection from the electronic terminal.

An embodiment of this application provides an electronic terminal, including a processor and a memory configured to store instructions that can be executed by the processor. The processor is configured to execute the instructions to implement the foregoing method.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium that carries computer-readable code. When the computer-readable code is run in a processor in an electronic device, the processor in the electronic device performs the foregoing method.

The computer-readable storage medium may be a tangible device that can retain and store instructions for use by an instruction execution device. The computer-readable storage medium may be, for example, but is not limited to an electronic storage device, a magnetic storage device, an optical storage device, an electromagnetic storage device, a semiconductor storage device, or any suitable combination thereof. More specific examples (non-exhaustive list) of the computer-readable storage medium include a portable computer disk, a hard disk, a random access memory (Random Access Memory, RAM), a read-only memory (Read-Only Memory, ROM), an erasable programmable read-only memory (Electrically Programmable Read-Only Memory, EPROM), a flash memory, a static random-access memory (Static Random-Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punched card or a protrusion structure in a groove that stores instructions, and any suitable combination thereof.

The computer-readable program instructions or code described herein may be downloaded from a computer-readable storage medium to each computing/processing device or to an external computer or an external storage device through a network such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network, and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming language includes an object-oriented programming language such as Smalltalk and C++, and a conventional procedural programming language such as a "C" language or a similar programming language. The computer-readable program instructions may be executed entirely on a user computer, partly on a user computer, as an independent software package, partly on a user computer and partly on a remote computer, or entirely on a remote computer or a server. When a remote computer is involved, the remote computer may be connected to a user computer through any type of network, including a local area network (Local Area Network, LAN) or a wide area network (Wide Area Network, WAN), or may be connected to an external computer (for example, through the Internet by using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, to implement the various aspects of this application.

The various aspects of this application are described herein with reference to the flowcharts and/or block diagrams of the method, the apparatus (system), and the computer program product according to the embodiments of this application. It should be understood that each block in the flowcharts and/or block diagrams and a combination of blocks in the flowcharts and/or block diagrams may be implemented by using the computer-readable program instructions.

These computer-readable program instructions may be provided to a processor of a general-purpose computer, a dedicated computer, or another programmable data processing apparatus to generate a machine, so that the instructions, when being executed by the processor of the computer or the another programmable data processing apparatus, generate an apparatus for implementing the functions/actions specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/actions specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to generate a computer-implemented process. Therefore, the instructions executed on the computer, the another programmable data processing apparatus, or the another device implements the functions/actions specified in one or more blocks in the flowcharts and/or block diagrams.

The flowcharts and block diagrams in the accompanying drawings show possible implementation architectures, functions, and operations of the apparatus, system, method, and computer program product according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, the functions marked in the blocks may alternatively occur in an order different from that marked in the accompanying drawings. For example, two consecutive blocks may actually be executed substantially in parallel, or two consecutive blocks may sometimes be executed in a reverse order, and this depends on functions involved.

It should also be noted that each block in the block diagrams and/or flowcharts and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described herein with reference to the embodiments, in a process of implementing the present invention that claims protection, a person skilled in the art may understand and implement another variation of the disclosed embodiments by viewing the accompanying drawings, the disclosed content, and the appended claims. In the claims, the word "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to achieve a better effect.

The embodiments of this application are described above. The foregoing descriptions are examples, are not exhaustive, and are not limited to the disclosed embodiments. Many modifications and changes are apparent to a person of ordinary skill in the art without departing from the scope and spirit of the described embodiments. The selection of the terms used in this specification is intended to best explain the principles of the embodiments, actual applications, or improvements to technologies in the market, or to enable another person of ordinary skill in the art to understand the embodiments disclosed in this specification.

## Claims

1. A fault detection method, comprising:
receiving, in a state in which an electronic terminal displays a first interface, a first user input used to perform fault detection on the electronic terminal;
starting a fault detection application in response to the first user input; and
displaying a fault detection interface of the fault detection application.

2. The method according to claim 1, wherein the first interface comprises a lock screen interface of the electronic terminal in a screen locked state or an application interface presented during execution of an application by the electronic terminal.

3. The method according to claim 1 or 2, wherein the receiving, in a state in which an electronic terminal displays a first interface, a first user input used to perform fault detection on the electronic terminal comprises:
when it is detected that a universal serial bus port of the electronic terminal is connected, receiving the first user input of pressing both a volume up button and a power button for a preset time period.

4. The method according to any one of claims 1 to 3, wherein after the displaying a fault detection interface of the fault detection application, the method further comprises:
displaying a list of secure network connection hotspots that are verified as secure in found network connection hotspots;
receiving a second user input, wherein the second user input comprises selecting a first network connection hotspot from the list of network connection hotspots and entering a connection password of the first network connection hotspot; and
accessing the first network connection hotspot in response to the second user input.

5. The method according to claim 4, wherein after the accessing the first network connection hotspot, the method further comprises:
obtaining a detection configuration file for the electronic terminal from a detection server corresponding to the electronic terminal; and
determining, by using the detection configuration file, that the electronic terminal supports the fault detection.

6. The method according to claim 5, wherein after the determining that the electronic terminal supports the fault detection, the method further comprises:
displaying a diagnosis analysis interface used to indicate to enter verification information for the fault detection;
receiving the verification information entered by a user in the diagnosis analysis interface; and
sending the verification information to the detection server.

7. The method according to claim 6, wherein after the sending the verification information to the detection server, the method further comprises:
obtaining at least one detection item for the fault detection from the detection server when verification performed by the detection server on the verification information by using preset verification information succeeds, wherein the at least one detection item is selected by the user in a detection item generation interface, and the detection item generation interface further comprises a control used to direct the user to set the preset verification information.

8. The method according to claim 7, wherein after the obtaining at least one detection item for the fault detection from the detection server when verification performed by the detection server on the verification information by using preset verification information succeeds, the method further comprises:
screening the at least one detection item by using the detection configuration file, and determining a final detection item that can be performed on the electronic terminal.

9. The method according to claim 7, wherein after the determining a final detection item that can be performed on the electronic terminal, the method further comprises:
performing detection on the electronic terminal based on the final detection item, to obtain a detection result; and
sending the detection result to the detection server.

10. The method according to any one of claims 5 to 9, wherein the detection configuration file comprises a region that supports the fault detection, a type of the electronic terminal, and a detection item.

11. A fault detection method, comprising:
determining a detection configuration file for an electronic terminal on which fault detection is to be directly performed without entering an unlocking password; and
sending the detection configuration file to the electronic terminal.

12. The method according to claim 11, wherein the detection configuration file comprises a region that supports performing the fault detection on the electronic terminal, a type of the electronic terminal, and a detection item.

13. The method according to claim 11 or 12, wherein after the sending the detection configuration file to the electronic terminal, the method further comprises:
receiving, when a detection item generation interface is displayed, at least one detection item selected by a user in the detection item generation interface and preset verification information set by the user for the fault detection.

14. The method according to claim 13, wherein after the receiving, when a detection item generation interface is displayed, at least one detection item selected by a user in the detection item generation interface and verification information set by the user for the fault detection, the method further comprises:
verifying, by using the preset verification information, verification information that is entered by the user on the electronic terminal and that is received from the electronic terminal; and
sending the at least one detection item to the electronic terminal after the verification succeeds.

15. The method according to claim 14, wherein after the sending the at least one detection item to the electronic terminal after the verification succeeds, the method further comprises:
receiving a detection result for the fault detection from the electronic terminal.

16. An electronic terminal, comprising:
a processor; and
a memory, configured to store instructions that can be executed by the processor, wherein
the processor is configured to execute the instructions to implement the method according to any one of claims 1 to 10 or the method according to any one of claims 11 to 15.

17. A non-volatile computer-readable storage medium, wherein the non-volatile computer-readable storage medium stores computer program instructions, and when the computer program instructions are executed by a processor, the method according to any one of claims 1 to 10 is implemented, or the method according to any one of claims 11 to 15 is implemented.
